# EUROPÄISCHE PATENTSCHRIFT

(11) **EP 0 638 781 B1**
(45) Veröffentlichungstag und Bekanntmachung des Hinweises auf die Patenterteilung: **19.08.1998**
(21) Anmeldenummer: 94110160.2
(22) Anmeldetag: 30.06.1994
(51) Int. Cl.: G01B 21/04

(54) **Kalibrier-Verfahren zum Ermitteln und Kompensieren unterschiedlicher Antastkraft-Verhältnisse bei Mehrkoordinaten-Tastsystemen**
Calibration-procedure to determine and to compensate for the different measuring-forces in coordinate measuring machines
Procédé d'étallonnage pour déterminer et compenser diverses forces de palpage des systèmes de mesures de plusieurs coordonnées

(30) Priorität: 07.08.1993 DE 4326551
(43) Veröffentlichungstag der Anmeldung: 15.02.1995
(73) Patentinhaber: Dr. Johannes Heidenhain GmbH, D-83292 Traunreut (DE)
(72) Erfinder: Stettner, Rudolf, D-83308 Trostberg (DE); Feichtinger, Kurt, D-83349 Palling (DE)

(56) Entgegenhaltungen:
- GB-A- 2 197 478
- US-A- 4 663 852
- PATENT ABSTRACTS OF JAPAN vol. 6, no. 225 (P-154) (1103) 10. November 1982 & JP-A-57 127 805 (OOSAKA KIKOU K.K.)
- MEASUREMENT, Bd.6, Nr.2, April 1988, LONDON, GB Seiten 50 - 54 S. SARTORI ET AL 'A way to improve the accuracy of a co-ordinate measuring machine'
- TM/ TECHNISCHES MESSEN, Bd.54, Nr.7-8, 1987, MüNCHEN, GERMANY Seiten 277 - 284 A. WECKENMANN, B. GAWANDE 'Prüfen von Werkstücken mit gekrümmten Flächen auf Koordinatenmessgeräten'
- Technische Rundschau, Heft 50, 1992, S.20-25, Lotze, Werner: "Messende Taster mit mehreren Freiheitsgraden"

## Beschreibung

Mehrkoordinaten-Tastsysteme werden zum Messen von Prüflingen bei Koordinaten-Meßmaschinen aber auch bei Werkzeugmaschinen eingesetzt, denn ausgehend von der Ähnlichkeit im mechanischen Aufbau und in der Kinematik zwischen numerisch gesteuerten Werkzeugmaschinen und Mehr-Koordinaten-Meßgeräten liegt es nahe, die Funktion einer Werkzeugmaschine im Hinblick auf eine Werkstückvermessung zu erweitern. Zunächst ist dazu ein geeignetes 3-D-Tastsystem sowohl mechanisch als auch signaltechnisch an die Werkzeugmaschine zu adaptieren. Das Tastsystem wird anstelle eines Werkzeuges im Werkzeug-Wechselmagazin abgelegt, wie ein Werkzeug eingewechselt und positioniert. Nach signaltechnischer Verknüpfung mit den Wegmeßsystemen der Maschine kann dann die Bearbeitungsmaschine prinzipiell als Koordinaten-Meßmaschine benutzt werden. Das Koordinatensystem der Werkzeugmaschine als räumliche Bezugsbasis in Verbindung mit den Wegmeßsystemen und einem elektronischen 3-D-Tastsystem ermöglicht ein räumliches Messen. Die Werkzeugmaschine wird jedoch erst dann für eine räumliche Werkstückvermessung geeignet, wenn es gelingt, die systematischen geometrischen Fehler der räumlichen Bezugsbasis - im wesentlichen Führungsfehler der Maschine - und die systematischen Fehler der Maßverkörperung zu erfassen und bei der Messung zu kompensieren. Dazu werden die genannten Eigenfehler der Maschine mit geeigneten Vergleichsmeßsystemen - z.B. Laserinterferometer - bestimmt und in Form einer Korrekturmatrix in einer funktional erweiterten Steuerung abgespeichert. Jedes im Augenblick einer Antastung von den Wegmeßsystemen übernommene Koordinatentripel wird dann mit den abgespeicherten Korrekturwerten verarbeitet. Aufgabe einer in die Steuerung integrierten bzw. an die Steuerung adaptierten Rechnereinheit ist darüber hinaus die Verarbeitung der Antastkoordinaten zu den Istabmessungen des Werkstückes, die Berechnung der Soll-/Istabweichungen, deren Ausgabe und Dokumentation auf Peripheriegeräten und in der letzten Ausbaustufe die Berechnung und Übergabe korrigierter NC-Daten für eine Kompensation von Bearbeitungsfehlern.

Zur Ermittlung der korrigierten NC-Daten gehört demgemäß auch die Berücksichtigung der Parameter des 3-D-Tastsystemes.

Wesentliches Merkmal der hier betrachteten elektronischen Tastsysteme ist ein federnd gelagerter Taststift, der um einen bestimmten Betrag ausgelenkt werden kann. Kann die Auslenkung der Tastkugel für jede Position innerhalb des Taststifthubes erfaßt werden, so spricht man von messenden Tastsystemen. Sie sind mit Wegmeßsystemen zur Bestimmung der Taststiftauslenkung ausgestattet.

Nach jedem Taststift-Wechsel muß daher eine Kalibrierung erfolgen, da aufgrund der Tastsystem-Mechanik die Antastkräfte in den verschiedenen Koordinatenrichtungen unterschiedlich sind, so daß die Taststift-Länge und seine Verbiegung beim Antastvorgang ausgeglichen werden müssen. Insbesondere machen unterschiedliche Federraten - die das Kraft/Weg-Verhältnis bei der Taststiftauslenkung bestimmen - eine Kalibrierung erforderlich.

Dieses Problem wurde bereits erkannt und in der Zeitschrift Technische Rundschau, Heft 50, 1992 auf den Seiten 20 bis 25 erörtert. Eine für die Praxis brauchbare Lösung ist nicht angegeben.

Der Erfindung liegt die Aufgabe zugrunde, ein Verfahren anzugeben, das einen einfachen Kalibriervorgang ermöglicht und gute Ergebnisse liefert.

Diese Aufgabe wird durch ein Verfahren gemäß Anspruch 1 gelöst.

Durch die Merkmale der abhängigen Ansprüche wird die Erfindung in vorteilhafter Weise ausgestaltet.

Mit Hilfe der Zeichnungen wird die Erfindung anhand eines Ausführungsbeispieles noch näher erläutert.

Es zeigt
- Figur 1: eine Dreikoordinaten-Meßmaschine,
- Figur 2: eine Kalibrier-Lehre und
- Figur 3: die Kalibrier-Lehre zur Durchführung des Verfahrens in Draufsicht.

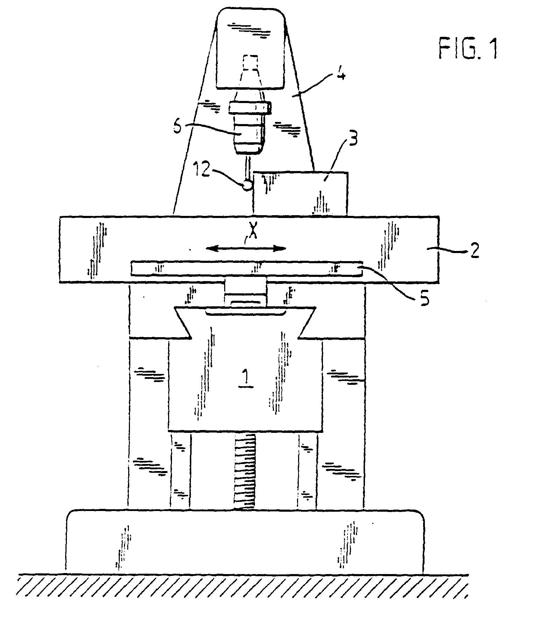

In Figur 1 ist eine Dreikoordinaten-Meßmaschine 1 mit einem Tisch 2 zur Aufnahme eines Prüfobjektes 3 dargestellt, der in drei orthogonalen Maschinenachsen auf einem Maschinenständer 4 verschiebbar ist. Zur Messung der Verschiebung des Tisches 2 mit dem Prüfobjekt 3 sind Längenmeßeinrichtungen 5 an der Dreikoordinaten-Meßmaschine 1 vorgesehen. Zum Antasten von Flächen des Prüfobjektes 3 ist am Maschinenständer 4 ein in den drei Maschinenachsen wirkendes Mehrkoordinaten-Tastsystem 6 befestigt.

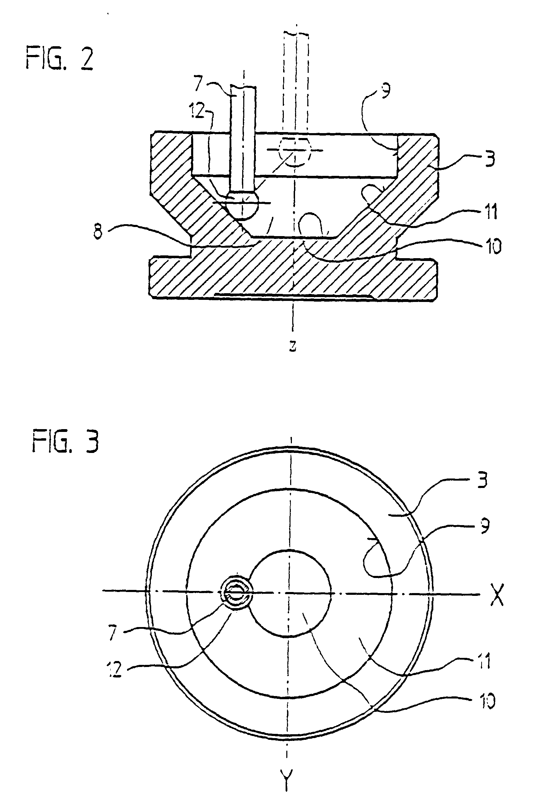

Als Prüfobjekt ist eine Kalibrier-Lehre 3 vorgesehen, die in den Figuren 2 und 3 in Schnittdarstellung und in Draufsicht dargestellt ist. Im Kontakt mit der Kalibrier-Lehre 3 befindet sich ein Taststift 7 des vorbeschriebenen Mehrkoordinaten-Tastsystemes 6 beim Kalibrier-Vorgang.

Die Kalibrier-Lehre 3 weist eine Bohrung 8 auf, die über eine zylindrische Ringfläche 9, einen ebenen Boden 10 und einen kegelförmigen Bereich 11 verfügt.

Zu Beginn des Kalibrier-Verfahrens werden verschiedene Daten als Parameter des Mehrkoordinaten-Tastsystemes 6 und der Kalibrier-Lehre 3 eingegeben. Dies sind insbesondere der Radius einer Tastkugel 12, die sich am Ende des Taststiftes 7 befindet und der Radius des zylindrischen Bereiches 9 der Kalibrier-Lehre 3. Besonders vorteilhaft ist es, die Tiefe der Bohrung der Kalibrier-Lehre 3, d.h. den Abstand des ebenen Bodens 10 von der Stirnfläche so zu wählen, daß er identisch mit dem Radius der Bohrung 8 ist. Durch diese Maßnahme ist der Ablauf des Kalibrier-Zyklus unabhängig vom Durchmesser der Antastkugel 12 nachdem er einmal eingespeichert ist, da wegen der Gleichheit von Tiefe und Radius der Bohrung 8 der Ablauf vereinfacht werden kann.

Nachdem der Taststift 7 des Tastsystemes 6 über dem ebenen Boden 10 der Kalibrier-Lehre 3 positioniert ist beginnt der Kalibrier-Zyklus mit dem Antastvorgang in Z-Richtung. Nach einer anschließenden Rückzugsbewegung bis in eine vorbestimmbare Höhe der Ringfläche 9 wird die Ringfläche 9 in den Richtungen -X, +X; -Y, +Y angetastet und dadurch das Zentrum der Kalibrier-Lehre ermittelt, in welchem sich die Antastkugel 12 anschließend befindet.

Durch nochmaliges Antasten der Ringfläche 9 aus dem Zentrum heraus wird in den vorgenannten Koordinaten-Richtungen ein Korrektur-Faktor, beispielsweise für die Verbiegung ermittelt. Nach nochmaligem Rückzug auf das Zentrum wird aus diesem heraus die konische Fläche 11 so angefahren, daß die Antastrichtung senkrecht zur Fläche 11 verläuft. Dabei erfolgt die Antastung einmal in der Ebene X,Z und einmal in der Ebene Y,Z.

Die bei dieser Antastung auftretende Auslenkung des Taststiftes führt in den Koordinaten X,Z bzw. Y,Z zu unterschiedlichen Auslenkungen, was im Wesentlichen auf die Mechanik des Mehrkoordinaten-Tastsystemes 6 zurückzuführen ist.

Durch den Antastvorgang treten auch undefinierte Reibungseinflüsse auf, die eine exakte Kompensation der unterschiedlichen Antastkräfte erschweren. Die Antastkräfte sind den Auslenkwegen umgekehrt proportional, werden aber durch die Reibung verfälscht.

Um die Reibungseinflüsse zu verringern wird der Antastbewegung nach der Antastung eine Bewegung überlagert, so daß die Reibung vernichtet oder zumindest stark reduziert wird.

Diese der ursprünglichen Antast-Bewegung überlagerte Bewegung muß in ihrer Richtung von der ursprünglichen Antastrichtung abweichen - beispielsweise senkrecht dazu verlaufen. Aber auch eine geringfügige Vibration reicht aus, um die Reibung zu eliminieren.

Nachdem durch diese Maßnahme die Antastung reibungsfrei geworden ist, können die Antastkraft-Verhältnisse über die Auslenkwege ermittelt werden. Die daraus errechneten Korrekturwerte werden also am Ende des Kalibriervorganges in die Maschinensteuerung eingetragen, so daß die Fehler des Mehrkoordinaten-Tastsystemes 1 automatisch kompensiert werden können.

Gegebenenfalls kann dem Kalibrier-Verfahren nach zufälliger Stromunterbrechung oder nach Aus- und Einschalten ein Eichvorgang vorangestellt werden.

Dieser besteht in einem Verfahren, das bei inkrementalen Meßsystemen an sich bekannt ist.

Nach dem Einschalten befindet sich das messende Tastsystem in einer zufälligen, unbekannten Position, und irgendwelche zufälligen Positionswerte werden angezeigt oder sind in der Steuerung gespeichert.

Um diese Position in Bezug auf einen Fixpunkt zu ermitteln, wird das Tastsystem in allen relevanten Koordinatenrichtungen über jeweils eine Referenzmarke gefahren. Durch die oder an der Referenzmarke wird der zufällig anstehende Meßwert genullt, also alle zugehörigen Speicher gelöscht. Dann wird das Tastsystem wieder in seine Ausgangslage zurückbewegt.

Dabei wird die Distanz von der Referenzmarke bis zur Ausgangslage gemessen und in einem beliebigen Speicher abgespeichert.

Diese Distanz ist eine Größe, die bei allen späteren Meßwerten mit eingerechnet wird, da sie die tatsächliche Lageabweichung des Tastsystemes von der die theoretische Null-Position des Tastsystemes repräsentierenden Referenzmarke darstellt.

Daher ist es vorteilhaft, diese Option grundsetzlich nach dem Einschalten der Mehr-Koordinaten-Meßeinrichtung zu nutzen.

## Patentansprüche

1. Kalibrier-Verfahren bei messenden Tastsystemen (6) die mit numerischen Steuereinrichtungen in Mehr-Koordinaten-Meßeinrichtungen (1) eingesetzt werden, durch Antasten von Kalibrier-Flächen (9, 10, 11) einer Kalibrier-Lehre (3), dadurch gekennzeichnet, daß zum Ermitteln und Kompensieren der Verhältnisse der Antastkräfte in unterschiedlichen Koordinatenrichtungen (X, Y, Z) folgende Verfahrensschritte vorgenommen werden:
- Eingeben von Parametern des messenden Tastsystems (6) in die Steuereinrichtung,
- Eingeben von Parametern der Kalibrier-Lehre (3) in die Steuereinrichtung,
- Antasten einer Kalibrier-Fläche (11) der Kalibrier-Lehre (3), wobei die vorgegebene Antastbewegung in einer Ebene erfolgt, die von zwei Koordinatenrichtungen (X, Z; Y, Z) definiert ist und eine Auslenkbewegung des Tastsystems (6) in zwei Koordinatenrichtungen (X, Z; Y, Z) verursacht,
- Überlagern der vorgegebenen Antastbewegung mit einer von dieser Antastbewegung abweichenden Bewegung,
- Ermittlung der Auslenkwege des messenden Tastsystems (6) in den zwei Koordinatenrichtungen (X, Z; Y, Z),
- Ermittlung der Verhältnisse der Antastkräfte in den zwei Koordinatenrichtungen (X, Z; Y, Z) aus den Auslenkwegen des Tastsystems (6) und Bildung von Korrekturfaktoren,
- Eingabe der Korrekturfaktoren in die Steuereinrichtung und
- automatisches Kompensieren der durch die Antastkräfte in den zwei Koordinatenrichtungen (X, Z; Y, Z) verursachten Antastfehler des Tastsystems (6) durch die Steuerung während des nachfolgenden Betriebes.

2. Kalibrier-Verfahren nach Anspruch 1, dadurch gekennzeichnet, daß die der vorgegebenen Antastbewegung überlagerte Bewegung eine Linearbewegung ist, die unter einem Winkel, bevorzugt orthogonal zur Antastrichtung verläuft.

3. Kalibrier-Verfahren nach Anspruch 1, dadurch gekennzeichnet, daß die der vorgegebenen Antastbewegung überlagerte Bewegung eine Vibrationsbewegung ist.

4. Kalibrier-Verfahren nach Anspruch 1, dadurch gekennzeichnet, daß beim Antasten ein kegelförmiger Bereich (11) einer Bohrung (8) der Kalibrier-Lehre (3) angetastet wird.

5. Kalibrier-Verfahren nach Anspruch 1, dadurch gekennzeichnet, daß den Verfahrensschritten ein Eichvorgang mit folgenden Verfahrensschritten vorangestellt ist:
- wenigstens in einer Koordinate wird aus der Ausgangslage des messenden Tastsystemes eine Referenzmarke des Tastsystems überfahren,
- an der Referenzmarke wird ein zufälliger Meßwert des Tastsystems gelöscht
- das Meßsystem kehrt in seine Ausgangslage zurück und
- die Distanz von der Referenzmarke bis zur Ausgangslage wird in einem Speicher abgespeichert.

## Claims

1. A calibration procedure for measuring sensing systems (6) which are used with numerically controlled devices in multi-coordinate measuring devices (1), through contacting calibration surfaces (9, 10, 11) of a calibration gauge (3), characterized in that the following method steps are carried out, in order to determine and compensate for the ratios of the contact forces in different coordinate directions (X, Y, Z):
- entering parameters of the measuring sensing system (6) in the control device,
- entering parameters of the calibration gauge (3) in the control device,
- contacting a calibration surface (11) of the calibration gauge (3), wherein the predetermined contacting movement takes place in a plane which is defined by two coordinate directions (X, Z; Y, Z) and causes a deflection of the sensing system (6) in two coordinate directions (X, Z; Y, Z),
- superimposing a movement deviating from this contacting movement on the predetermined contacting movement,
- determining the deflection of the measuring sensing system (6) in the two coordinate directions (X, Z; Y, Z),
- determining the ratio of the contact forces in the two coordinate directions (X, Z; Y, Z) from the deflections of the sensing system (6) and forming correction factors,
- entering the correction factors in the control device and
- compensating automatically for the contact errors of the sensing system (6) caused by the contact forces in the two coordinate directions (X, Z; Y, Z) through the control during the subsequent operation.

2. A calibration procedure according to claim 1, characterized in that the movement superimposed on the predetermined contacting movement is a linear movement which is at an angle to, preferably orthogonal to the sensing direction.

3. A calibration procedure according to claim 1, characterized in that the movement superimposed on the predetermined contacting movement is a vibrational movement.

4. A calibration procedure according to claim 1, characterized in that a conical region (11) of a bore (8) of the calibration gauge (3) is contacted in the sensing.

5. A calibration procedure according to claim 1, characterized in that an adjustment procedure with the following method steps precedes the method steps:
- a reference mark of the sensing system is traversed in at least one coordinate from the starting position of the measuring sensing system,
- a random measured value of the sensing system is cancelled out at the reference mark,
- the measuring system returns to its starting position and
- the distance from the reference mark to the starting position is stored in a memory.

## Revendications

1. Procédé de calibrage dans des systèmes de palpage (6) mesurants qui sont utilisés en relation avec des dispositifs de commande numérique dans des dispositifs de mesures multi-axes (1), par palpage de surfaces de calibrage (9, 10, 11) d'un calibre étalon (3), caractérisé par le fait que pour déterminer et compenser les forces de palpage dans différentes directions de coordonnées (X, Y, Z), on procède conformément aux étapes suivantes:
- entrée de paramètres du système de palpage (6) mesurant dans le système de commande,
- entrée de paramètres du calibre étalon (3) dans le dispositif de commande,
- palpage d'une surface de calibrage (11) du calibre étalon (3), le mouvement de palpage préétabli ayant lieu dans un plan défini par deux directions de coordonnées (X, Z; Y, Z) et provoquant une déviation du système de palpage (6) dans deux directions de coordonnées (X, Z; Y, Z),
- superposition du mouvement de palpage préétabli à un mouvement qui s'écarte dudit mouvement de palpage,
- détermination des courses de déviation du système de palpage (6) mesurant dans les deux directions de coordonnées (X, Z; Y, Z),
- détermination des forces de palpage dans les deux directions de coordonnées (X, Z; Y, Z), à partir des courses de déplacement du système de mesure (6) et formation de facteurs de correction,
- entrée des facteurs de correction dans le dispositif de commande et
- compensation automatique par la commande, pendant le fonctionnement consécutif, des erreurs de palpage du système de palpage (6) engendrées par les forces de palpage dans les deux directions de coordonnées (X, Z; Y, Z).

2. Procédé de calibrage selon la revendication 1, caractérisé par le fait que le mouvement superposé au mouvement de palpage préétabli est un mouvement linéaire qui a lieu suivant un angle par rapport à la direction de palpage, de préférence perpendiculairement à celle-ci.

3. Procédé de calibrage selon la revendication 1, caractérisé par le fait que le mouvement superposé au mouvement de palpage est un mouvement vibratoire.

4. Procédé de calibrage selon la revendication 1, caractérisé par le fait que lors du palpage on palpe une zone (11) de forme conique d'un trou (8) du calibre étalon (3).

5. Procédé de calibrage selon la revendication 1, caractérisé par le fait qu'une procédure d'étalonnage comportant les étapes indiquées ci-dessous est placée avant le procédé de calibrage:
- dans au moins une direction de coordonnée, on amène le système de palpage mesurant de sa position départ sur un repère de référence du système de palpage,
- au niveau du repère de référence, on efface une éventuelle valeur de mesure du système de palpage,
- on ramène le système de palpage dans sa position de départ et
- on mémorise dans une mémoire la distance entre le repère de référence et la position de départ.
